# EUROPÄISCHE PATENTSCHRIFT

(11) **EP 0 438 733 B1**
(45) Veröffentlichungstag und Bekanntmachung des Hinweises auf die Patenterteilung: **06.07.1994**
(21) Anmeldenummer: 90124617.3
(22) Anmeldetag: 18.12.1990
(51) Int. Cl.: B41F 13/20

(54) **Lagerhalterung für auf Wellenzapfen aufgesetzte Lager**
Bearing support disposed on the ends of shafts
Support de palier pour des extrémités d'arbres

(30) Priorität: 22.01.1990 DE 4001736
(43) Veröffentlichungstag der Anmeldung: 31.07.1991
(73) Patentinhaber: Windmöller & Hölscher, D-49525 Lengerich (DE)
(72) Erfinder: Rogge, Dieter, W-4540 Lengerich (DE); Blom, Robert, W-4542 Tecklenburg (DE)
(74) Vertreter: Gossel, Hans K., Dipl.-Ing.

(56) Entgegenhaltungen:
- DE-B- 1 254 112
- FR-A- 724 292
- US-A- 2 513 643
- US-A- 4 412 753

## Beschreibung

Die Erfindung betrifft eine Lagerhalterung für auf Wellenzapfen aufgesetzte Lager, vorzugsweise für Lager von Formatzylindern und Farbauftragswalzen von Druckmaschinen, bestehend aus einer unteren gestellfesten Tragschale und einem schwenkbar mit dieser verbundenen Deckelteil, das in seiner auf das in die Tragschale eingelegte Lager geklappten Schließstellung verriegelbar ist.

Eine derartige beispielsweise aus der DE-PS 23 63 955 bekannte Lagerhalterung ist mit einem Deckelteil versehen, das in seiner Schließstellung etwa die obere Hälfte der Lagerhalterung bildet und durch schwenkbar mit diesem verbundene Halteschrauben mit der unteren Tragschale verriegelbar ist. Die Halteschrauben sind in seitlich an der unteren Tragschale vorgesehene Aufnahme- und Widerlagerteile einschwenkbar und mit diesen durch aufgeschraubte Muttern verspannbar. Zu einem Wellen-, Formatzylinder- oder Rasterwalzenwechsel müssen zunächst die Muttern der Halteschrauben gelöst und diese sodann ausgeschwenkt werden, um insgesamt den Deckelteil zur Öffnung der Lagerhalterung ausschwenken zu können. Das Lösen und Aufklappen des Deckelteils muß somit von Hand geschehen, was einen zusätzlichen Betätigungsaufwand bedeutet und den Wechsel der Wellen oder Walzen durch Roboter oder andere automatisierte Einrichtungen unmöglich macht. Aufgabe der Erfindung ist es daher, eine Lagerhalterung der eingangs angegebenen Art zu schaffen, die das Ausheben und Einsetzen von Wellenzapfen ermöglicht, ohne daß von Hand Deckelteile gelöst und zum Zwecke des Öffnens und Schließens verschwenkt und verriegelt werden müssen. Ziel der Erfindung ist es, Wellenzapfen mit auf diese aufgesetzte Lager durch automatisierte Einrichtungen in Lagerhalterungen einzusetzen und aus diesen auszuheben, ohne daß manuelle Arbeiten zum Öffnen und Schließen der Lagerhalterungen notwendig sind.

Erfindungsgemäß wird diese Aufgabe bei einer Lagerhalterung der eingangs angegebenen Art dadurch gelöst, daß mit den beiden oberen seitlichen Bereichen der Tragschale um zu den Wellenzapfen parallele Achsen je ein Deckelteil schwenkbar gelagert ist, das aus dem oberen längeren Arm eines zweiarmigen Hebels besteht, dessen unterer Arm einen Betätigungsteil bildet, der in der ausgeklappten geöffneten Stellung des Deckelteils derart in das Innere der Tragschale ragt, daß er durch Absenken des gegen diesen stoßenden, auf den Wellenzapfen aufgesetzten Lagers in die Tragschale den Deckelteil in seine Schließstellung verschwenkt, in der dieser mit einer kreisbogenförmig gekrümmten inneren Seite dicht an dem Lager anliegt, und daß die derart in ihre Schließstellung geklappten und an ihren Stirnseiten aneinander liegenden Deckelteile mit einer diese selbsttätig miteinander verriegelnden Einrichtung versehen sind. Die erfindungsgemäße Lagerhalterung besteht somit aus zwei symmetrisch zu der vertikalen durch die Achse des Wellenzapfens verlaufenden Mittelebene der Tragschale wippenartig angeordnete Deckelteile, die sich beim Absenken des auf den Wellenzapfen aufgesetzten Lagers in die Tragschale zangenartig dadurch schließen, daß das Lager die Deckelteile über deren Betätigungsteile in deren Schließstellung bewegt.

Die die beiden Deckelteile selbsttätig miteinander verriegelnde Einrichtung kann aus einem in einem Deckelteil gelagerten hammerkopfartigen Riegel bestehen, der mit einem Dreh- und Spanntrieb versehen und hinter ein gabelförmiges Widerlagerteil des anderen Deckelteils greift. Der Dreh- und Spanntrieb kann aus einem an sich bekannten pneumatischen Drehhubzylinder bestehen, der den Schaft des hammerkopfartigen Riegels unter Drehung um 90 Grad spannt. Derartige Drehhubzylinder weisen an dem Kolben oder der Kolbenstange Nocken auf, die in wendelförmige Führungen greifen und dadurch die Kolbenstange beim Ein- und Ausfahren verdrehen. Die Anordnung kann dabei so gewählt sein, daß der hammerkopfartige Riegel in der Öffnungsstellung in das gabelförmige Widerlagerteil greift und durch Betätigung des Drehhubzylinders diesen unter Drehung um 90 Grad spannend hintergreift.

Die geöffnete Aufnahmestellung der Deckelteile kann durch an diesen oder der unteren Tragschale vorgesehene Anschläge gesichert sein.

Ein Ausführungsbeispiel der Erfindung wird nachstehend anhand der Zeichnung näher erläutert.

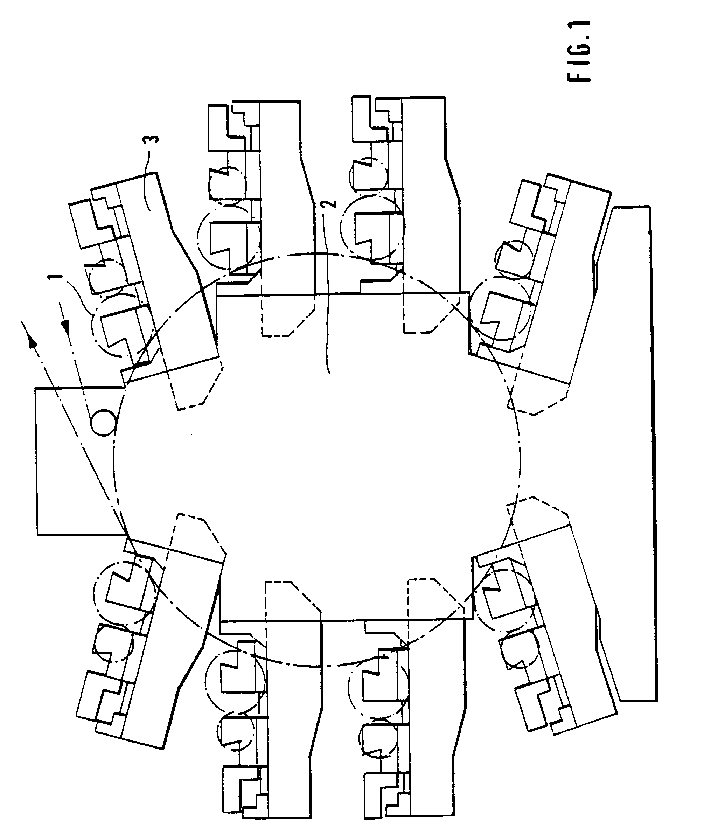

In dieser zeigt
- Fig.1: eine Flexodruckmaschine in schematischer Seitenansicht,
- Fig.2: eine Druckwerkskonsole der Flexodruckmaschine in Seitenansicht,
- Fig.3: eine Seitenansicht der Lagerhalterung eines Lagers der Rasterwalze in seiner geöffneten Stellung,
- Fig.4: eine Draufsicht auf die Lagerhalterung nach Fig.3
- Fig.5: die in den Fig.3 und 4 dargestellte Lagerhalterung in der Schließstellung
- Fig.6: einen Schnitt durch die Lagerhalterung längs der Linie VI-VI in Fig.5 und
- Fig.7: eine Draufsicht auf die Verriegelung der schwenkbaren Deckelteile der Lagerhalterung in Richtung des Pfeils A in Fig.5.

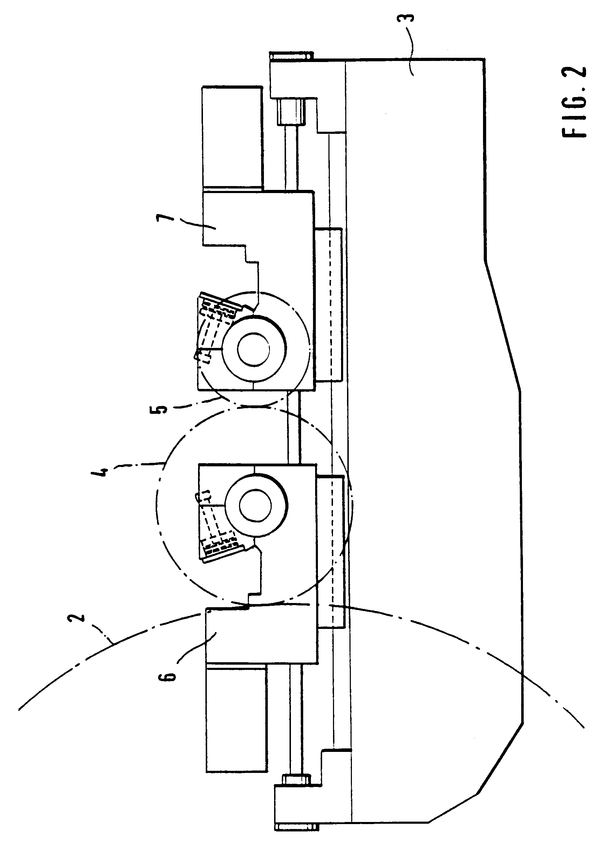

Eine Flexodruckmaschine 1 ist mit einem zentralen Gegendruckzylinder 2 versehen, an den Formatzylinder 4 einstellbar sind, die zusammen mit Rasterwalzen 5 auf mit dem Gestell verbundenen Druckwerkskonsolen 3 in verschieblichen Lagerböcken gelagert sind. Flexodruckmaschinen dieser Art sind beispielsweise aus der DE-PS 29 41 521 bekannt. Eine dieser Druckwerkskonsolen 3 ist in Fig.2 in vergrößerter Darstellung gezeichnet. Aus dieser Figur 2 ist zu erkennen, daß jede Druckwerkskonsole einen Formatzylinder 4 und eine Rasterwalze 5 trägt. Zwecks Verstellung von Formatzylinder 4 und Rasterwalze 5 auf der Farbwerkskonsole 3 sind sowohl Formatzylinder 4 als auch Rasterwalze 5 in Lagerböcken 6 und 7 verschiebbar auf den Druckwerkskonsolen 3 gelagert.

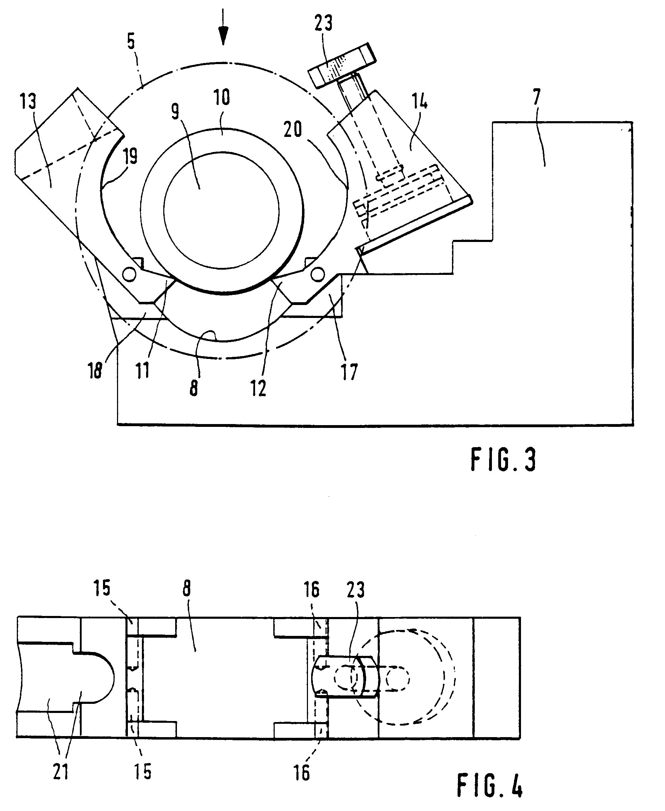

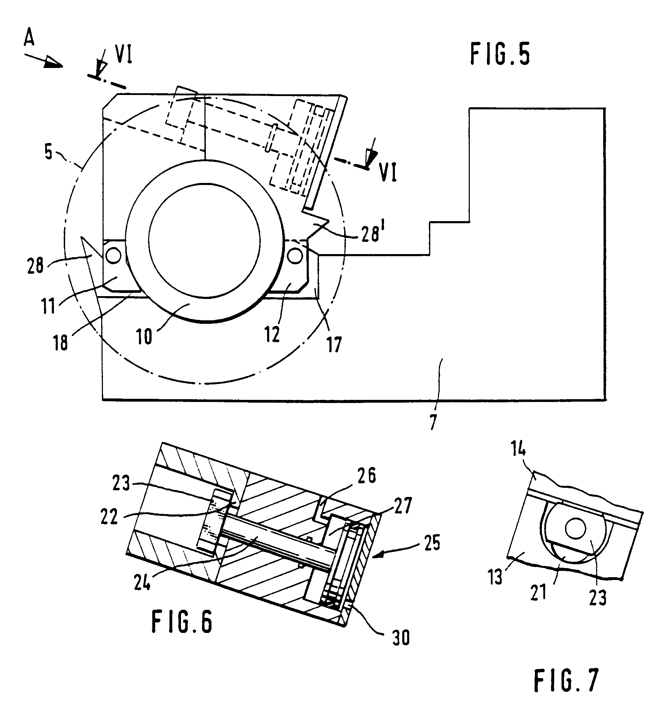

Die Figur 3 zeigt lediglich den Rasterwalzenlagerbock 7, wobei dieser eine eingearbeitete Lageraufnahme 8 aufweist. In diese wird von oben das auf den Zapfen 9 der Rasterwalze 5 aufgesetzte Lager 10 eingelegt. In der in Figur 3 dargestellten Lage befindet sich die Rasterwalze noch oberhalb der eingearbeiteten Lageraufnahme 8 im Rasterwalzenlagerbock 7. Das Lager 10 berührt dabei gerade zwei Nasen 11 und 12, wobei die Nase 11 einstückig mit einer linken Klappdeckelhälfte 13 und die Nase 12 mit der entsprechenden rechten Deckelhälfte 14 einstückig ausgebildet ist. Beide Klappdeckelhälften 13 und 14 sind an Drehzapfen 15 bzs. 16 schwenkbar gelagert, die in Ausfräsungen 17 und 18 des Rasterwalzenlagerbockes 7 eingearbeitet sind. Wird nun die Rasterwalze 5 weiter abgesenkt, legt sich das Lager 10 in die eingearbeitete Lageraufnahme 8 hinein, wobei es die Nasen 11 und 12 wegdrückt, so daß die beiden Klapplagerdeckelhälften 13 und 14 aufeinander zu bewegt werden und sich mit ihren Anlagenflächen 19 und 20 dichtend oberhalb der eingearbeiteten Lageraufnahme 8 um das Lager 10 herumlegen. In dieser Stellung müssen beide Klappdeckelhälften 13 und 14 miteinander verriegelt werden. Zu diesem Zweck weist die linke Klappdeckelhälfte eine abgesetzte Ausdrhung 21 auf, so daß zwischen dem durchmessergrößeren Bereich und dem durchmesserkleineren Bereich eine Schulter 22 entsteht. Hinter diese Schulter greift eine Klemmplatte 23, die an einer Kolbenstange 24 befestigt ist. Diese Kolbenstange 24 ist Teil eines Drehhubzylinders 25, der in die rechte Klappdeckellagerhälfte 14 eingearbeitet ist. Ein Drehhubzylinder ist bekannt. Er ist in der Lage, eine Kolbenstange (in unserem Falle die Kolbenstange 24) auszufahren und gleichzeitig die Kolbenstange zu verdrehen. Im Falle unseres Ausführungsbeispiels bewegt sich demzufolge die Klemmplatte 15 während des Zusammenklappens der beiden Klappdeckelhälften 13 und 14 in den Durchmesser größeren Bereich der abgesetzten Ausdrehung 21 hinein. Danach wird die Kolbenstange 24 um 90° verdreht, wobei die beidseits abgeflachte Klemmplatte 23 die aus der Figur 7 ersichtliche Stellung einnimmt. Sobald dies geschehen ist, wird über eine Bohrung 26 Preßluft in den Zylinderraum 27 des Drehhubzylinders geleitet, wodurch die Kolbenstange 24 eingefahren wird und sich die Klemmplatte 23 fest gegen die Schulter 22 legt. Die beiden Klappdeckelhälften sind somit fest miteinander verriegelt.

Der Rasterwalzenlagerbock 7 weist einen Anschlag 28 auf, der die Klappbewegung der linken Klappdeckelhälfte 13 begrenzt. Im falle der Klappdeckelhälfte 14 weist dieser Klappdeckel 14 selbst eine Anschlagnase 28' auf, die sich wie die Figur 3 zeigt, auf den Rasterwalzenlagerbock 7 auflegt, wodurch die Schwenkbewegung dieser Deckelhälfte 14 ebenfalls begrenzt ist.

Wenn im Ausführungsbeispiel ausgeführt ist, daß die erfindungsgemäße Lagerausbildung für Rasterwalzen vorgesehen ist, so zeigt doch die Figur 2, daß in analoger Weise selbstverständlich auch eine derartige Anordnung für einen Formatzylinderlagerbock vorgesehen sein kann.

Vorstehend ist beschrieben, wie das Lager verriegelt werden kann, nachdem eine Rasterwalze neu eingelegt ist. Soll nun die Rasterwalze 5 wieder herausgenommen werden, wird zunächst einmal die Bohrung 26 des Drehhubzylinders mit der Atmosphäre verbunden und durch eine weitere Bohrung 30 Preßluft zugeführt. Hierdurch fährt die Kolbenstange 24 aus und die Klemmplatte 23 wird wiederum um 90° verdreht, sie nimmt dann die in Fig.4 dargestellte Drehstellung ein. Danach kann die Rasterwalze 5 mittels einer Hilfsvorrichtung ausgehoben werden, so daß durch das Lager 10 dann die beiden Klappdeckelhälften 13 und 14 so weit nach außengeschwenkt werden, daß sich die Deckelhälfte 13 gegen den Anschlag 28 und die Nase 28' der Deckelhälfte 14 gegen den Rasterwalzenlagerbock 7 legt. Die zuvor beschriebene Einrichtung ist selbstverständlich auf beiden Seiten einer Rasterwalze bzw. eines Formzylinders angeordnet, und zwar in identischer Weise.

## Patentansprüche

1. Lagerhalterung für auf Wellenzapfen aufgesetzte Lager (10), vorzugsweise für Lager (10) von Formatzylindern und Farbauftragswalzen von Druckmaschinen, bestehend aus einer unteren gestellfesten Tragschale (8) und einem schwenkbar mit dieser verbundenen Deckelteil (13,14), das in seiner auf das in die Tragschale (8) eingelegte Lager (10) geklappten Schließstellung verriegelbar ist,
**dadurch gekennzeichnet**,
daß mit den beiden oberen seitlichen Bereichen der Tragschale (8) um zu dem Wellenzapfen (9) parallele Achsen (15,16) je ein Deckelteil (13,14) schwenkbar gelagert ist, das aus dem oberen längeren Arm eines zweiarmigen Hebels besteht, dessen unterer Arm einen Betätigungsteil (11,12) bildet, der in der ausgeklappten geöffneten Stellung des Deckelteils derart in das Innere der Tragschale (8) ragt, daß er durch Absenken des gegen diesen stoßenden, auf den Wellenzapfen aufgesetzten Lagers in die Tragschale den Deckelteil (13,14) in seine Schließstellung verschwenkt, in der dieser mit seiner kreisbogenförmig gekrümmten inneren Seite (19,20) dich an dem Lager (10) anliegt, und daß die derart in ihre Schließstellung geklappten und mit ihren Stirnseiten aneinander liegenden Deckelteile (13,14) mit einer diese selbsttätig miteinander verriegelnden Einrichtung versehen sind.

2. Lagerhalterung nach Anspruch 1, dadurch gekennzeichnet, daß in einem Deckelteil (14) ein hammerkopfförmiger Riegel (23) gelagert ist, der mit einem Dreh- und Spanntrieb versehen und hinter ein gabelförmiges Widerlagerteil (21) des anderen Deckelteils (13) greift.

3. Lagerhalterung nach Anspruch 2, dadurch gekennzeichnet, daß der Dreh- und Spanntrieb aus einem pneumatischen Drehhubzylinder 25 besteht.

4. Lagerhalterung nach einem der Ansprüche 1 bis 3, dadurch gekennzeichnet, daß die geöffnete Aufnahmestellung der Deckelteile (13,14) durch an diesen oder der unteren Tragschale (8) vorgesehene Anschläge (28,28') gesichert ist.

## Claims

1. A bearing support for bearings (10) fitted on journals, preferably for bearings (10) of plate cylinders and ink application rollers of printing presses, consisting of a lower bearing shell (8) fixed to the frame and a lid part (13, 14) pivotably connected thereto, which is boltable in its closed position wherein it is folded onto the bearing (10) that is inserted into the bearing shell (8),
**characterized in that**,
together with the two top lateral zones of the bearing shell (8), there is mounted for pivoting round pins (15, 16) that are parallel to the journal (9), one lid part (13, 14) each, that consists of the upper longer arm of a two-armed lever whose lower arm forms an actuating component (11, 12) which, in the swung-out opened position of the lid part, projects into the inside of the bearing shell (8) in such a way that, by lowering the hearing which is fitted on the journal and abuts onto it into the bearing shell (8), it pivots the lid part (13, 14) into its closed position wherein the latter bears, with its inner side (19,20) having a curved circular arc shape, closely on the bearing (10); and that the lid parts (13, 14), folded in this way into their closed position and bearing with their end parts on each other, are provided with a device that automatically locks them together.

2. A bearing support according to claim 1, characterized in that a hammer head shaped bolt (23) is mounted in one lid part (14), which is provided with a rotary and clamping drive and reaches behind a fork-shaped bearing means component (21) of the other lid part (13).

3. A bearing support according to claim 2, characterized in that the rotary and clamping drive consists of a pneumatic rotary lifting jack (25).

4. A bearing support according to one of claims 1 to 3, characterized in that the opened receiving position of the lid parts (13, 14) is secured by stops (28, 28') provided thereon or on the bottom bearing shall (8).

## Revendications

1. Support de palier pour des paliers (10) placé sur des tourillons d'arbre, de préférence pour des paliers (10) de cylindres de format et de rouleaux d'application d'encre de machines d'impression, constitué d'une cuvette de support (8) inférieure solidaire du bâti et d'une partie de couvercle (13, 14) reliée de façon pivotante à celle-ci et qui peut être verrouillée dans sa position de fermeture rabattue sur le palier (10) placé dans la cuvette de support (8), caractérisé en ce que, sur chacune des zones latérales supérieures de la cuvette de support (8) est monté pivotante, autour d'axes (15, 16) parallèles au tourillon d'arbre (9), respectivement une partie de couvercle (13, 14) qui est constituée du bras supérieur plus long d'un levier à deux bras dont le bras inférieur constitue une pièce d'actionnement (11, 12) qui, dans la position ouverte basculée vers l'extérieur de la partie de couvercle fait saillie de telle façon dans l'intérieur de la cuvette de support (8) qu'il fait pivoter, en abaissant le palier heurtant celle-ci, placé sur le tourillon d'arbre, dans la cuvette de support, la partie de couvercle (13, 14) dans sa position de fermeture dans laquelle celle-ci s'applique par son côté intérieur courbé en arc de cercle (19, 20) de manière étanche au palier (10), et que les parties de couvercle (13, 14) basculées de cette façon dans leur position de fermeture et s'appliquant l'une contre l'autre par leurs côtés frontaux sont pourvues d'un dispositif verrouillant celles-ci l'une avec l'autre automatiquement.

2. Support de palier selon la revendication 1, caractérisé en ce qu'il est disposé dans une partie de couvercle (14) un verrou en forme de tête de marteau (23) qui est pourvu d'une commande d'entraînement en rotation et de serrage et qui vient en prise derrière une partie de butée (21) en forme de fourche de l'autre partie de couvercle (13).

3. Support de palier selon la revendication 2, caractérisé en ce que la commande d'entraînement en rotation et de serrage est constituée d'un vérin pneumatique à coulissement et rotation (25).

4. Support de palier selon l'une des revendications 1 à 3, caractérisé en ce que la position de réception ouverte des parties de couvercle (13, 14) est assurée par des butées (28, 28') prévues à celles-ci ou à la cuvette de support inférieure (8).
